(19) Europäisches Patentamt
European Patent Office
Office européen des brevets

(11) EP 2 692 790 A1

(12) **EUROPEAN PATENT APPLICATION**
published in accordance with Art. 153(4) EPC

(43) Date of publication:
**05.02.2014 Bulletin 2014/06**

(21) Application number: **12764468.0**

(22) Date of filing: **28.03.2012**

(51) Int Cl.:
***C08L 15/00*** *(2006.01)* ***B60C 1/00*** *(2006.01)*
***C08F 236/10*** *(2006.01)* ***C08K 3/36*** *(2006.01)*

(86) International application number:
**PCT/JP2012/058054**

(87) International publication number:
**WO 2012/133480 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2011 JP 2011073203**

(71) Applicant: **Sumitomo Rubber Industries, Ltd.**
**Kobe-shi, Hyogo 651-0072 (JP)**

(72) Inventors:
- **MINAGOSHI Akira**
  **Kobe-shi**
  **Hyogo 651-0072 (JP)**
- **UESAKA Kenichi**
  **Kobe-shi**
  **Hyogo 651-0072 (JP)**

(74) Representative: **Manitz, Finsterwald & Partner GbR**
**Martin-Greif-Strasse 1**
**80336 München (DE)**

# (54) RUBBER COMPOSITION FOR USE IN TIRES, AND PNEUMATIC TIRE

(57) The present invention provides a rubber composition for a tire, which results in both excellent fuel economy and high wet grip performance as well as good abrasion resistance; and a pneumatic tire formed from the rubber composition. The present invention relates to a rubber composition for a tire, the rubber composition containing a modified styrene butadiene rubber formed using a specific nitrogen-containing compound as a monomer, silica, and a specific amount of a diene rubber gel.



Printed by Jouve, 75001 PARIS (FR)

## Description

TECHNICAL FIELD

The present invention relates to a rubber composition for a tire, and a pneumatic tire using the same.

BACKGROUND ART

The fuel economy of vehicles has been improved by decreasing the rolling resistance (or improving the performance in terms of rolling resistance) of tires. These days, better fuel economy is increasingly required of vehicles, and very low heat build-up (excellent fuel economy) is required of rubber compositions for producing tires.

As the method for improving the fuel economy of a rubber composition, a method of reducing the amount of reinforcing filler is known. However, in this method, the hardness and strength of the rubber composition may be decreased, causing a decrease in handling performance (handling stability), wet grip performance, durability, and abrasion resistance.

Another known method for improving the fuel economy is a method of replacing carbon black used as a reinforcing filler by silica. However, because silica contains a hydrophilic silanol group on its surface, it has lower compatibility with rubber (particularly, natural rubber, butadiene rubber, styrene butadiene rubber, and the like, which are commonly used for tires), compared to carbon black. In some cases, silica is inferior to carbon black in terms of abrasion resistance and mechanical strength (tensile strength and elongation at break).

Patent Literature 1 discloses a rubber composition for a tire, which contains both anhydrous silica and hydrous silica and thus can greatly improve wet grip performance. However, such a rubber composition still leaves room for improvement in terms of fuel economy, wet grip performance, and abrasion resistance.

CITATION LIST

PATENT LITERATURE

Patent Literature 1: JP-A 2003-192842

SUMMARY OF INVENTION

TECHNICAL PROBLEM

The present invention aims to provide a rubber composition for a tire, which solves the above problems and results in both excellent fuel economy and high wet grip performance as well as good abrasion resistance; and a pneumatic tire formed from the rubber composition.

SOLUTION TO PROBLEM

The present invention relates to a rubber composition for a tire, including:

a rubber component including a modified styrene butadiene rubber that contains a constitutional unit derived from a nitrogen-containing compound in a main chain; silica; and a diene rubber gel containing a hydroxy group and having a glass-transition temperature of -40 to -10°C, the diene rubber gel being contained in an amount of 10 to 30 parts by mass per 100 parts by mass of the rubber component,
the nitrogen-containing compound being represented by the following formula:

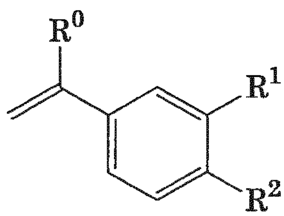

wherein $R^0$ represents a hydrogen atom, a C1-C30 aliphatic hydrocarbon group, a C3-C30 alicyclic hydrocarbon group, or a C5-C30 aromatic hydrocarbon group; $R^1$ and $R^2$ are the same or different and each represent a hydrogen

atom,

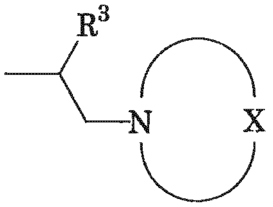

,

or

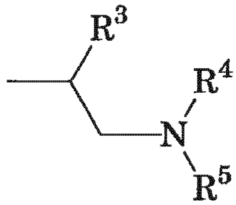

,

provided that at least one of $R^1$ and $R^2$ is not a hydrogen atom; $R^3$ represents a hydrogen atom or a C1-C4 hydrocarbon group; X represents a divalent saturated hydrocarbon group optionally containing nitrogen, oxygen, or sulfur, and optionally substituted with

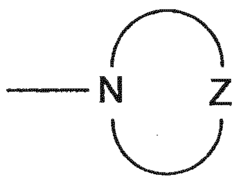

or

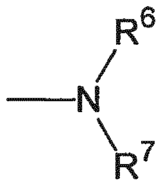

wherein Z represents a divalent saturated hydrocarbon group optionally containing nitrogen, oxygen, or sulfur; and $R^4$ to $R^7$ are the same or different and each represent a hydrogen atom, a C1-C30 aliphatic hydrocarbon group, a C3-C30 alicyclic hydrocarbon group, a C5-C30 aromatic hydrocarbon group, or a heterocyclic group having 3 to 30 ring member atoms.

Preferably, the modified styrene butadiene rubber is contained in an amount of 5% by mass or more based on 100% by mass of the rubber component, and the silica is contained in an amount of 10 to 150 parts by mass per 100 parts by mass of the rubber component.

The rubber composition is preferably for use as a rubber composition for a tread.

The present invention also relates to a pneumatic tire, including a tread formed from the rubber composition.

ADVANTAGEOUS EFFECTS OF INVENTION

The rubber composition for a tire according to the present invention contains a modified styrene butadiene rubber formed using a specific nitrogen-containing compound as a monomer, silica, and a specific amount of a diene rubber gel; and thus results in both excellent fuel economy and high wet grip performance as well as good abrasion resistance.

DESCRIPTION OF EMBODIMENTS

The present invention relates to a rubber composition including: a rubber component including a modified styrene butadiene rubber that contains a constitutional unit derived from a nitrogen-containing compound in a main chain; silica; and a diene rubber gel containing a hydroxy group and having a glass-transition temperature of -40 to -10°C; the nitrogen-containing compound being represented by the following formula:

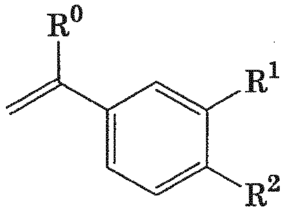

wherein $R^0$ represents a hydrogen atom, a C1-C30 aliphatic hydrocarbon group, a C3-C30 alicyclic hydrocarbon group, or a C5-C30 aromatic hydrocarbon group; $R^1$ and $R^2$ are the same or different and each represent a hydrogen atom,

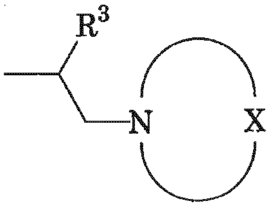

,

or

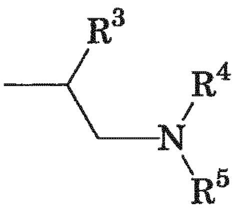

,

provided that at least one of $R^1$ and $R^2$ is not a hydrogen atom; $R^3$ represents a hydrogen atom or a C1-C4 hydrocarbon group; X represents a divalent saturated hydrocarbon group optionally containing nitrogen, oxygen, or sulfur, and optionally substituted with

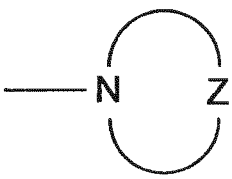

or

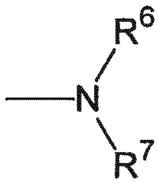

wherein Z represents a divalent saturated hydrocarbon group optionally containing nitrogen, oxygen, or sulfur; and $R^4$ to $R^7$ are the same or different and each represent a hydrogen atom, a C1-C30 aliphatic hydrocarbon group, a C3-C30

alicyclic hydrocarbon group, a C5-C30 aromatic hydrocarbon group, or a heterocyclic group having 3 to 30 ring member atoms.

The use of the modified styrene butadiene rubber (modified SBR) obtained by introducing the nitrogen-containing compound into the main chain of styrene butadiene rubber improves the dispersibility of silica in the rubber composition. Moreover, since the diene rubber gel also contains C=C double bonds on the surface of each particle made of diene rubber, and also contains a hydroxy group on the surface of each particle, it can increase affinity (interaction) with silica. Because these effects are synergistically exerted, excellent fuel economy and high wet grip performance are both achieved, and good abrasion resistance and favorable handling stability are also achieved at the same time.

Examples of the modified SBR include those mentioned in JP-A 2010-116545 and JP-A 2010-116546.

Examples of the saturated hydrocarbon group represented by X which contains nitrogen, oxygen, or sulfur include $(CR^{10}R^{11})_m$-$NR^{12}$- $(CR^{13}R^{14})_n$, $(CR^{10}R^{11})_m$-O- $(CR^{13}R^{14})_n$, and $(CR^{10}R^{11})_m$-S-$(CR^{13}R^{14})_n$. $R^{10}$ to $R^{14}$ are the same or different and each represent a hydrogen atom, a C1-C30 (preferably C1-C5) aliphatic hydrocarbon group, a C3-C30 (preferably C3-C10) alicyclic hydrocarbon group, or a C5-C30 (preferably C5-C10) aromatic hydrocarbon group. Herein, m and n each represent an integer of 1 to 9 (preferably 1 to 6). When m is 2 or greater, the multiple $(CR^{10}R^{11})$s may be the same or different. When n is 2 or greater, the multiple $(CR^{13}R^{14})$s may be the same or different.

Examples of the saturated hydrocarbon group represented by Z which contains nitrogen, oxygen, or sulfur include those mentioned for the saturated hydrocarbon group represented by X.

For better dispersion of silica, $R^0$ is preferably a hydrogen atom or a C1 or C2 aliphatic hydrocarbon group. $R^3$ is preferably a hydrogen atom or a C1 or C2 hydrocarbon group. $R^4$ to $R^7$ each are preferably an aliphatic hydrocarbon group, an aromatic hydrocarbon group, or a heterocyclic group; and more preferably an aliphatic hydrocarbon group. $R^{10}$ to $R^{14}$ each are preferably a hydrogen atom or a C1 or C2 aliphatic hydrocarbon group.

The modified SBR is a copolymer produced by copolymerizing styrene, butadiene (1,3-butadiene), and the nitrogen-containing compound (monomer) represented by the above formula, and contains a constitutional unit derived from the nitrogen-containing compound in a main chain portion. The "main chain portion" as used herein is a concept that encompasses the terminal portions.

Examples of the nitrogen-containing compound represented by the above formula include 3- or 4- (2-azetidinoethyl) styrene, 3- or 4-(2-pyrrolidinoethyl)styrene, 3- or 4-(2-piperidinoethyl)styrene, and 3- or 4-(2-hexamethyleneiminoethyl) styrene. These compounds may be used alone or in combinations of two or more. For better dispersion of silica, 3- or 4-(2-pyrrolidinoethyl)styrene is preferred.

The modified SBR preferably has at least one terminal modified by a modifier that contains a functional group containing at least one selected from the group consisting of nitrogen, oxygen, and silicon, and more preferably has both terminals modified by the modifier. This increases the effect to improve various performances.

Examples of functional groups in the modifier include amino, amide, alkoxysilyl, isocyanate, imino, imidazole, urea, ether, carbonyl, carboxyl, hydroxyl, nitrile, and pyridyl groups. Preferred among these are amino and alkoxysilyl groups. Examples of the modifier include 3-(N,N-dimethylamino)propyltrimethoxysilane, 3-(N,N-diethylaminopropyl)trimethoxysilane, 3-(N,N-dimethylamino)propyltriethoxysilane, 3-(N,N-diethylaminopropyl)triethoxysilane, 3-glycidoxypropyltrimethoxysilane, 2-(4-pyridylethyl)triethoxysilane, N-(3-triethoxysilylpropyl)-4,5-dihydroimidazole, and silicon tetrachloride. A preferred examples is 3-(N,N-dimethylamino)propyltrimethoxysilane.

The amount of the nitrogen-containing compound in the modified SBR is preferably 0.05% by mass or more, and more preferably 0.1% by mass or more. An amount of less than 0.05% by mass is less likely to exert an improving effect on fuel economy and wet grip performance. The amount of the nitrogen-containing compound in the modified SBR is preferably 10% by mass or less, and more preferably 5% by mass or less. An amount of more than 10% by mass is less likely to give an effect commensurate with the increased cost.

The amount of the nitrogen-containing compound described herein is determined by a method described in the examples (described later).

The weight average molecular weight (Mw) of the modified SBR is preferably $1.0 \times 10^5$ or more, and more preferably $2.0 \times 10^5$ or more. An Mw of less than $1.0 \times 10^5$ tends to deteriorate fuel economy and abrasion resistance. The Mw is preferably $2.0 \times 10^6$ or less, and more preferably $1.5 \times 10^6$ or less. An Mw of more than $2.0 \times 10^6$ tends to deteriorate processability.

Herein, the weight average molecular weight (Mw) is determined by a method described in the examples (described later).

The amount of the modified SBR, based on 100% by mass of the rubber component, is preferably 5% by mass or more, and more preferably 50% by mass or more. The addition of the modified SBR in an amount of less than 5% by mass tends to fail to produce its effects sufficiently. The upper limit of the amount of the modified SBR is not particularly limited and is preferably 90% by mass or less, and more preferably 80% by mass or less. An amount of more than 90% by mass tends to deteriorate processability.

The rubber composition of the present invention containing the modified SBR may also contain other rubber materials. Examples thereof include diene rubbers such as natural rubber (NR), isoprene rubber (IR), butadiene rubber

(BR), and styrene butadiene rubber (SBR). These rubbers may be used alone or in combinations of two or more. NR is particularly preferred for excellent fuel economy and favorable tensile strength at break.

The NR is not particularly limited, and the ones commonly used in the tire industry can be used.

The amount of NR, based on 100% by mass of the rubber component, is preferably 10% by mass or more, and more preferably 20% by mass or more. The addition of NR in an amount of less than 10% by mass tends to fail to produce its effects sufficiently. The amount of NR is preferably 60% by mass or less, and more preferably 40% by mass or less. An amount of more than 60% by mass results in a reduction of the amount of the modified SBR, possibly leading to poor fuel economy and insufficient wet grip performance.

The diene rubber gel can be prepared through cross-linking of a diene rubber dispersion. Examples of the diene rubber dispersion include rubber latex produced by emulsion polymerization, and a diene rubber dispersion obtained by emulsification of solution-polymerized diene rubber in water. Examples of usable cross-linking agents include organic peroxides, organic azo compounds, and sulfur cross-linking agents. The diene rubber can also be cross-linked by copolymerization with a polyfunctional compound having a cross-linking effect during the emulsion polymerization for diene rubber. Specifically, the methods disclosed in JP Patent No. 3739198, JP Patent No. 3299343, JP-T 2004-504465, JP-T 2004-506058, and the like can be used.

The diene rubber gel used in the present invention contains a hydroxy group. For example, an OH group can be introduced into the particle surface by modifying the diene rubber with a compound containing a hydroxy group and having reactivity to a C=C double bond.

Examples of such compounds (modifiers) include hydroxyalkyl (meth)acrylates such as hydroxybutyl acrylate or methacrylate, hydroxyethyl acrylate or methacrylate, and hydroxypropyl acrylate or methacrylate, as disclosed in JP-T 2004-506058.

Examples of the diene rubber component forming the diene rubber gel include various diene rubbers described above. These diene rubbers may be used alone or in combinations of two or more. Those mainly containing SBR are particularly preferred because the glass-transition temperature can be easily adjusted.

The diene rubber gel has a glass-transition temperature (Tg) of -40°C or higher, preferably -35°C or higher, and more preferably -30°C or higher. A glass-transition temperature lower than -40°C may deteriorate wet grip performance. The glass-transition temperature is -10°C or lower, preferably -15°C or lower, and more preferably -20°C or lower. A glass-transition temperatures higher than -10°C may deteriorate abrasion resistance.

The diene rubber gel preferably has an average particle size of 10 nm or larger, and more preferably 30 nm or larger. An average size of smaller than 10 nm may cause agglomeration of gel. The average particle size is preferably 100 nm or smaller, and more preferably 80 nm or smaller. An average size of larger than 100 nm may deteriorate abrasion resistance.

The average particle size of the diene rubber gel is determined using an electron microscope.

The hydroxy number (mg KOH/g-gel) of the diene rubber gel is preferably 60 or lower, more preferably 50 or lower, and still more preferably 40 or lower. A hydroxy number greater than 60 results in an increase in the gel particle size, possibly decreasing the strength. The hydroxy number is preferably 10 or greater, more preferably 20 or greater, and still more preferably 30 or greater. A hydroxy number below 10 results in a decrease in the interaction between the silica and the polymer, possibly decreasing the strength.

The hydroxy number of the diene rubber gel indicates the amount (in milligrams) of potassium hydroxide required for neutralization of the acetic acid bonded to a hydroxy group when acetylating 1 g of the diene rubber gel. It is a value determined by potentiometric titration (JIS K0070).

The amount of diene rubber gel is 10 parts by mass or more, preferably 15 parts by mass or more, per 100 parts by mass of the rubber component. An amount of less than 10 parts by mass may result in insufficient wet grip performance. The amount is 30 parts by mass or less, preferably 25 parts by mass or less. An amount of more than 30 parts by mass may result in insufficient fuel economy.

Examples of silica include dry-process silica (anhydrous silica) and wet-process silica (hydrous silica). Dry-process silica is preferred because it has many silanol groups.

The nitrogen adsorption specific surface area ($N_2SA$) of silica is preferably 100 $m^2/g$ or larger, and more preferably 150 $m^2/g$ or larger. An $N_2SA$ of smaller than 100 $m^2/g$ may result in a small reinforcing effect and insufficient abrasion resistance. The $N_2SA$ of silica is preferably 300 $m^2/g$ or smaller, and more preferably 200 $m^2/g$ or smaller. An $N_2SA$ of larger than 300 $m^2/g$ may decrease the dispersibility of silica and results in insufficient fuel economy.

The $N_2SA$ of silica is determined by the BET method in accordance with ASTM D3037-81.

The amount of silica is preferably 10 parts by mass or more, and more preferably 60 parts by mass or more, per 100 parts by mass of the rubber component. The addition of silica in an amount of less than 10 parts by mass tends to fail to produce its effects sufficiently. The amount of silica is preferably 150 parts by mass or less, and more preferably 90 parts by mass or less. The silica in an amount of more than 150 parts by mass tends to be less dispersible in the rubber and deteriorate rubber processability.

The rubber composition of the present invention preferably contains a silane coupling agent in addition to silica.

Examples of silane coupling agents include sulfide-based, mercapto-based, vinyl-based, amino-based, glycidoxy-based, nitro-based, and chloro-based silane coupling agents. Preferred among these are sulfide-based silane coupling agents such as bis(3-triethoxysilylpropyl)tetrasulfide, bis(2-triethoxysilylethyl)tetrasulfide, bis(3-triethoxysilylpropyl)disulfide, and bis(2-triethoxysilylethyl)disulfide. Bis(3-triethoxysilylpropyl)disulfide and bis(3-triethoxysilylpropyl)tetrasulfide are more preferred. Herein, the lower limit of the amount of silane coupling agent is preferably 2 parts by mass or more, and more preferably 6 parts by mass or more, per 100 parts by mass of silica; and the upper limit thereof is preferably 15 parts by mass or less, and more preferably 10 parts by mass or less.

The rubber composition of the present invention preferably contains carbon black.

Herein, the carbon black preferably has a nitrogen adsorption specific surface area ($N_2SA$) of 60 $m^2/g$ or larger, and more preferably 90 $m^2/g$ or larger. An $N_2SA$ of smaller than 60 $m^2/g$ tends to result in insufficient reinforcement and poor abrasion resistance. The carbon black preferably has a $N_2SA$ of 180 $m^2/g$ or smaller, and more preferably 130 $m^2/g$ or smaller. The carbon black having an $N_2SA$ of larger than 180 $m^2/g$ tends to have poor dispersibility and thereby increase heat build-up.

The $N_2SA$ of carbon black is determined in accordance with JIS K 6217-2:2001.

The amount of carbon black is preferably 5 to 20 parts by mass, per 100 parts by mass of the rubber component. An amount of less than 5 parts by mass may result in insufficient reinforcement, and an amount of more than 20 parts by mass tends not to result in sufficiently low heat build-up.

In the case where the rubber composition of the present invention contains carbon black, the total amount of silica and carbon black is preferably 60 to 120 parts by mass, per 100 parts by mass of the rubber component. When the total amount is in that range, fuel economy, wet grip performance, and abrasion resistance are achieved in a balanced manner.

The silica content, based on a total of 100% by mass of silica and carbon black, is 50% by mass or more, preferably 65% by mass or more, and more preferably 75% by mass or more. The effects of the present invention may not be achieved when the silica content is less than 50% by mass. The silica content is preferably 95% by mass or less, and more preferably 90% by mass or less. A silica content of more than 95% by mass may lead to lower weather resistance and lower ozone resistance.

In addition to the above-described components, additives commonly used in production of rubber compositions can be suitably added to the rubber composition of the present invention. Examples of such additives include zinc oxide, stearic acid, various antioxidants, wax, oil, vulcanizing agents such as sulfur, and vulcanization accelerators.

The rubber composition of the present invention is produced by an ordinary method. For example, the rubber composition can be produced by a method of kneading the above components by a Banbury mixer, a kneader, an open roll mill or the like, and vulcanizing the resulting mixture. The rubber composition of the present invention can be used for any tire components and can be particularly suitably used for treads.

The pneumatic tire of the present invention can be produced by an ordinary method, using the above-described rubber composition. Specifically, an unvulcanized rubber composition to which various additives are added as needed is extruded and processed according to the shape of each tire component (such as a tread) ; and formed into each tire component and assembled with other tire components by an ordinary method using a tire building machine so as to form an unvulcanized tire. The unvulcanized tire is then heated and pressed in a vulcanizer into a tire.

## EXAMPLES

The present invention will be described in detail based on examples, but is not limited to these examples.

The chemical agents used in synthesis of monomer (1) and polymers (1) and (2) are listed below.

Cyclohexane: available from Kanto Chemical Co., Inc. Pyrrolidine: available from Kanto Chemical Co., Inc. Divinylbenzene: available from Sigma-Aldrich Japan K.K. 1.6 M solution of n-butyllithium in hexane: available from Kanto Chemical Co., Inc.

Isopropanol: available from Kanto Chemical Co., Inc. Styrene: available from Kanto Chemical Co., Inc. Butadiene: available from Takachiho Chemical Industrial Co., Ltd.

Tetramethylethylenediamine: available from Kanto Chemical Co., Inc.

Modifier: 3-(N,N-dimethylamino)propyltrimethoxysilane available from AZmax. Co.

Preparation 1 (synthesis of monomer (1))

A 100-mL vessel in which the air was sufficiently replaced by nitrogen was charged with 50 mL of cyclohexane, 4.1 mL (3.6 g) of pyrrolidine, and 6.5 g of divinylbenzene. Further, 0.7 mL of a 1.6 M solution of n-butyllithium in hexane was added to the vessel at 0°C, and the mixture was stirred.

After one hour, isopropanol was added thereto to terminate the reaction. The resulting mixture was subjected to extraction and purification so as to obtain monomer (1).

Preparation 2 (synthesis of polymer (1))

A 1000-mL pressure-resistant vessel in which the air was sufficiently replaced by nitrogen was charged with 600 mL of cyclohexane, 12.6 mL (11.4 g) of styrene, 71.0 mL (41.0 g) of butadiene, 0.29 g of monomer (1), and 0.11 mL of tetramethylethylenediamine. Then, 0.2 mL of a 1.6 M solution of n-butyllithium in hexane was added to the vessel at 40°C, and the mixture was stirred.

After three hours, 3 mL of isopropanol was added to the mixture to terminate the polymerization. 1 g of 2,6-tert-butyl-p-cresol was added to the reaction solution. Then, the reaction solution was subjected to reprecipitation with methanol, and dried under heat so as to obtain polymer (1).

Preparation 3 (synthesis of polymer (2))

A 1000-mL pressure-resistant vessel in which the air was sufficiently replaced by nitrogen was charged with 600 mL of cyclohexane, 12.6 mL (11.4 g) of styrene, 71.0 mL (41.0 g) of butadiene, 0.29 g of monomer (1), and 0.11 mL of tetramethylethylenediamine. Further, 0.2 mL of a 1.6 M solution of n-butyllithium in hexane was added to the vessel at 40°C, and the mixture was stirred.

After three hours, 0.5 mL (0.49 g) of 3-(N,N-dimethylamino)propyltrimethoxysilane (modifier) was added to the mixture, and the resulting mixture was stirred.

After one hour, 3 mL of isopropanol was added thereto to terminate the polymerization. After the addition of 1 g of 2, 6-tert-butyl-p-cresol to the reaction solution, the reaction mixture was reprecipitated with methanol, and dried under heat so as to obtain polymer (2).

(Measurement of weight average molecular weight Mw)

The weight average molecular weight (Mw) was determined using a device of GPC-8000 series available from Tosoh Corporation and a differential refractometer as the detector. The molecular weight was calibrated with polystyrene standards.

(Measurement of content of nitrogen-containing compound in polymer)

The content of the nitrogen-containing compound in the polymer (the monomer (1) content) was determined using a device of JNM-ECA series available from JEOL Ltd.

The chemical agents used in the examples and the comparative examples are listed below.

SBR: E15 available from Asahi Kasei Chemicals Corporation
Polymer (1): main chain-modified SBR (produced in Preparation 2; Mw: $3.0 \times 10^5$; monomer (1) content: 1.0% by mass)
Polymer (2): main chain- and terminal-modified SBR (produced in Preparation 3; Mw: $3.0 \times 10^5$; monomer (1) content: 1.0% by mass)
Diene rubber gel (1): Nanoprene BM 0OH available from LANXESS (diene rubber component: SBR; Tg: 0°C; hydroxy number: 35 mg KOH/g-gel; average particle size: 50 nm)
Diene rubber gel (2): Nanoprene BM 15OH available from LANXESS (diene rubber component: SBR; Tg: -15°C; hydroxy number: 35 mg KOH/g-gel; average particle size: 50 nm)
Diene rubber gel (3): Nanoprene BM 25OH available from LANXESS (diene rubber component: SBR; Tg: -25°C; hydroxy number: 35 mg KOH/g-gel, average particle size: 50 nm)
NR: RSS#3
Silica: ULTRASIL VN3 ($N_2SA$: 175 $m^2/g$) available from Degussa
Carbon black: DIABLACK N220 ($N_2SA$: 114 $m^2/g$) available from Mitsubishi Chemical Corporation
Silane coupling agent: Si69 (bis(3-triethoxysilylpropyl)tetrasulfide) available from Degussa
Zinc oxide: zinc oxide #1 available from Mitsui Mining & Smelting Co., Ltd.
Stearic acid: stearic acid "Tsubaki" available from NOF Corporation
Antioxidant: Antigene 6C (N-(1,3-dimethylbutyl)-N'-phenyl-p-phenylenediamine) available from Sumitomo Chemical Co., Ltd.
Wax: SUNNOC N available from Ouchi Shinko Chemical Industrial Co., Ltd.
Oil: Process X-140 available from Japan Energy Corporation
Sulfur: powdered sulfur available from Karuizawa Iou K. K.
Vulcanization accelerator (1): Nocceler CZ (N-cyclohexyl-2-benzothiazolylsulfenamide) available from Ouchi Shinko Chemical Industrial Co., Ltd.

Vulcanization accelerator (2): Nocceler D (N,N'-diphenylguanidine) available from Ouchi Shinko Chemical Industrial Co., Ltd.

Examples and Comparative Examples

According to each formulation shown in Table 1, ingredients except the sulfur and the vulcanization accelerators were kneaded in a Banbury mixer at 150°C for 5 minutes, whereby a kneaded mixture was obtained. Subsequently, the sulfur and the vulcanization accelerators were added to the kneaded mixture, and then the resulting mixture was kneaded with an open roll mill at 80°C for three minutes, whereby an unvulcanized rubber composition was obtained. The thus obtained unvulcanized rubber composition was molded into the shape of a tread, and assembled with other tire components to form a tire, and the tire was vulcanized at 170°C for 10 minutes to produce a test tire (tire size: 195/65R15).
The thus obtained test tires were evaluated as follows. Table 1 shows the results.

(Rolling resistance)

A rolling resistance tester was used to measure the rolling resistance produced by the test tires when these tires were tested under the following conditions: rim of 15 × 6JJ, internal pressure of 230 kPa, load of 3.43 kN, and speed of 80 km/h. The measured value was converted into an index by the equation shown below. A higher index indicates a lower rolling resistance and better fuel economy.

(Rolling resistance index) = (rolling resistance of Comparative Example 1)/(rolling resistance of each composition) × 100

(Wet grip performance)

A vehicle on which the test tires were mounted was run on a wet asphalt road, and the braking distance with an initial speed of 100 km/h was measured. The measured value was converted into an index by the equation shown below. A higher index indicates better wet grip performance (wet skid performance).

(Wet grip performance index) = (braking distance of Comparative Example 1)/(braking distance of each composition) × 100

(Abrasion resistance)

A vehicle on which the test tires were mounted was run in a city area, and the running distance corresponding to a reduction of the groove depth by 1 mm was calculated from the reduction of the groove depth after driving 8000 km. The calculated value was converted into an index by the following formula. A higher index indicates better abrasion resistance.

(Abrasion resistance index) = (running distance of each composition)/(running distance of Comparative Example 1) × 100

(Handling stability)

The test tires were mounted on all the wheels of a vehicle (Japanese front engine front drive car, 2000 cc), and the vehicle was driven on a test course. The handling stability was evaluated by the driver by sensory evaluation. Relative evaluation was made on a scale of 1 to 10, where the results of Comparative Example 1 were given 6. A higher score indicates better handling stability.
[Table 1]

| | | Comparative Example 1 | Comparative Example 2 | Comparative Example 3 | Comparative Example 4 | Comparative Example 5 | Example 1 | Comparative Example 6 | Example 2 | Comparative Example 7 | Example 3 | Example 4 |
|---|---|---|---|---|---|---|---|---|---|---|---|---|
| Composition (parts by mass) | SBR | 70 | — | — | 70 | — | — | — | — | — | — | — |
| | Polymer (1) | — | 70 | — | — | 70 | 70 | 70 | 70 | 70 | — | 60 |
| | Polymer (2) | — | — | 70 | — | — | — | — | — | — | 70 | — |
| | Diene rubber gel (1) | — | — | — | — | 20 | — | — | — | — | — | — |
| | Diene rubber gel (2) | — | — | — | 20 | — | 20 | — | — | — | 20 | 20 |
| | Diene rubber gel (3) | — | — | — | — | — | — | 5 | 20 | 40 | — | — |
| | NR | 30 | 30 | 30 | 30 | 30 | 30 | 30 | 30 | 30 | 30 | 40 |
| | Silica | 75 | 75 | 75 | 75 | 75 | 75 | 75 | 75 | 75 | 75 | 75 |
| | Carbon black | 10 | 10 | 10 | 10 | 10 | 10 | 10 | 10 | 10 | 10 | 10 |
| | Silane coupling agent | 6 | 6 | 6 | 6 | 6 | 6 | 6 | 6 | 6 | 6 | 6 |
| | Zinc oxide | 3 | 3 | 3 | 3 | 3 | 3 | 3 | 3 | 3 | 3 | 3 |
| | Stearic acid | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 |
| | Oil | 20 | 20 | 20 | 20 | 20 | 20 | 20 | 20 | 20 | 20 | 20 |
| | Sulfur | 2 | 2 | 2 | 2 | 2 | 2 | 2 | 2 | 2 | 2 | 2 |
| | Vulcanization accelerator (1) | 1.5 | 1.5 | 1.5 | 1.5 | 1.5 | 1.5 | 1.5 | 1.5 | 1.5 | 1.5 | 1.5 |
| | Vulcanization accelerator (2) | 1.2 | 1.2 | 1.2 | 1.2 | 1.2 | 1.2 | 1.2 | 1.2 | 1.2 | 1.2 | 1.2 |
| Evaluation | Rolling resistance index | 100 | 110 | 112 | 100 | 105 | 112 | 110 | 110 | 104 | 114 | 110 |
| | Wet grip performance index | 100 | 105 | 107 | 108 | 115 | 114 | 104 | 110 | 115 | 117 | 110 |
| | Abrasion resistance index | 100 | 102 | 104 | 100 | 97 | 104 | 102 | 102 | 100 | 104 | 100 |
| | Handling stability index | 6 | 5 | 4 | 7 | 9 | 8 | 6 | 7 | 6 | 8 | 7 |

As shown in Table 1, the examples, which used a silica formulation in combination with a specific amount of a diene rubber gel and a modified SBR formed using a specific nitrogen-containing compound as a main chain-modified monomer, showed a remarkable improvement in fuel economy and wet grip performance, as well as good abrasion resistance and handling stability. Moreover, it is demonstrated that the combined use of the modified SBR and the diene rubber gel synergistically improved the performance, and in particular had a great synergetic effect on fuel economy and handling stability.

## Claims

**1.** A rubber composition for a tire, comprising:

a rubber component comprising a modified styrene butadiene rubber that contains a constitutional unit derived from a nitrogen-containing compound in a main chain;
silica; and
a diene rubber gel containing a hydroxy group and having a glass-transition temperature of -40 to -10°C, the diene rubber gel being contained in an amount of 10 to 30 parts by mass per 100 parts by mass of the rubber component,
the nitrogen-containing compound being represented by the following formula:

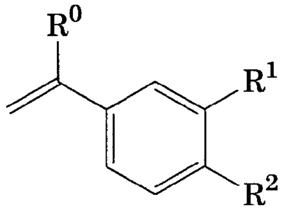

wherein $R^0$ represents a hydrogen atom, a C1-C30 aliphatic hydrocarbon group, a C3-C30 alicyclic hydrocarbon group, or a C5-C30 aromatic hydrocarbon group; $R^1$ and $R^2$ are the same or different and each represent a hydrogen atom,

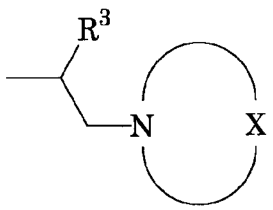

,

or

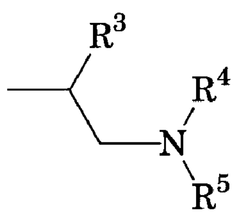

,

provided that at least one of $R^1$ and $R^2$ is not a hydrogen atom; $R^3$ represents a hydrogen atom or a C1-C4 hydrocarbon group; X represents a divalent saturated hydrocarbon group optionally containing nitrogen, oxygen, or sulfur, and optionally substituted with

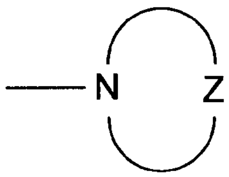

,

or

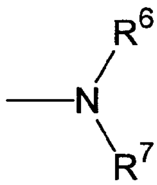

wherein Z represents a divalent saturated hydrocarbon group optionally containing nitrogen, oxygen, or sulfur; and $R^4$ to $R^7$ are the same or different and each represent a hydrogen atom, a C1-C30 aliphatic hydrocarbon group, a C3-C30 alicyclic hydrocarbon group, a C5-C30 aromatic hydrocarbon group, or a heterocyclic group having 3 to 30 ring member atoms.

**2.** The rubber composition for a tire according to claim 1,
wherein the modified styrene butadiene rubber is contained in an amount of 5% by mass or more based on 100% by mass of the rubber component, and
the silica is contained in an amount of 10 to 150 parts by mass per 100 parts by mass of the rubber component.

**3.** The rubber composition for a tire according to claim 1 or 2, which is for use as a rubber composition for a tread.

**4.** A pneumatic tire, comprising a tread formed from the rubber composition according to claim 3.

## INTERNATIONAL SEARCH REPORT

International application No.
PCT/JP2012/058054

A. CLASSIFICATION OF SUBJECT MATTER
*C08L15/00*(2006.01)i, *B60C1/00*(2006.01)i, *C08F236/10*(2006.01)i, *C08K3/36*(2006.01)i

According to International Patent Classification (IPC) or to both national classification and IPC

B. FIELDS SEARCHED

Minimum documentation searched (classification system followed by classification symbols)
C08L15/00-15/02, B60C1/00, C08F236/10, C08K3/36

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2010-116545 A (Sumitomo Rubber Industries, Ltd.), 27 May 2010 (27.05.2010), claims; paragraphs [0033], [0039], [0043] to [0045], [0048]; examples & US 2010/0099810 A1 & EP 2177562 A2 & CN 101724127 A | 1-4 |
| Y | JP 2010-116546 A (Sumitomo Rubber Industries, Ltd.), 27 May 2010 (27.05.2010), claims; paragraphs [0030], [0037], [0038], [0043]; examples & US 2010/0099795 A1 & EP 2184318 A2 & CN 101724185 A | 1-4 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 June, 2012 (19.06.12) | 03 July, 2012 (03.07.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/058054

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-116554 A (Sumitomo Rubber Industries, Ltd.), 27 May 2010 (27.05.2010), claims; paragraphs [0029], [0035], [0038] to [0040], [0043]; examples (Family: none) | 1-4 |
| Y | JP 2010-116556 A (Sumitomo Rubber Industries, Ltd.), 27 May 2010 (27.05.2010), claims; paragraphs [0032], [0035], [0038] to [0040], [0043]; examples (Family: none) | 1-4 |
| Y | JP 2011-46875 A (Sumitomo Rubber Industries, Ltd.), 10 March 2011 (10.03.2011), claims; paragraphs [0044], [0045]; examples (Family: none) | 1-4 |
| Y | JP 2009-203331 A (The Yokohama Rubber Co., Ltd.), 10 September 2009 (10.09.2009), claims; paragraphs [0001] to [0003], [0011]; examples (Family: none) | 1-4 |
| Y | JP 2009-203330 A (The Yokohama Rubber Co., Ltd.), 10 September 2009 (10.09.2009), claims; paragraphs [0001] to [0003], [0012]; examples (Family: none) | 1-4 |
| Y | JP 2009-209262 A (The Yokohama Rubber Co., Ltd.), 17 September 2009 (17.09.2009), claims; paragraphs [0001] to [0003], [0008], [0012]; examples (Family: none) | 1-4 |
| Y | WO 2005/082995 A1 (The Yokohama Rubber Co., Ltd., Nippon Zeon Co., Ltd.), 09 September 2005 (09.09.2005), claims; examples & US 2007/0167555 A1 & EP 1719798 A1 | 1-4 |
| Y | JP 2009-120845 A (The Yokohama Rubber Co., Ltd.), 04 June 2009 (04.06.2009), claims; paragraphs [0001] to [0003], [0023]; examples (Family: none) | 1-4 |

Form PCT/ISA/210 (continuation of second sheet) (July 2009)

**INTERNATIONAL SEARCH REPORT**

International application No.
PCT/JP2012/058054

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-257160 A (The Yokohama Rubber Co., Ltd., Nippon Zeon Co., Ltd.), 28 September 2006 (28.09.2006), claims; paragraph [0011]; examples (Family: none) | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003192842 A
- JP 2010116545 A
- JP 2010116546 A
- JP 3739198 B
- JP 3299343 B
- JP 2004504465 T
- JP 2004506058 T